# EUROPÄISCHE PATENTANMELDUNG

(11) **EP 4 748 225 A1**
(43) Veröffentlichungstag der Anmeldung: **27.05.2026**
(21) Anmeldenummer: 25217785.2
(22) Anmeldetag: 21.11.2025
(51) Int. Cl.: A01K 31/18

(54) **AUF- UND ABSTIEGSHILFE FÜR GEFLÜGELTIERE SOWIE AUFZUCHTVOLLIERE FÜR GEFLÜGEL MIT EINER SOLCHEN AUF- UND ABSTIEGSHILFE**

(30) Priorität: 21.11.2024 LU 509005
(71) Anmelder: Big Dutchman International GmbH, 49377 Vechta (DE)
(72) Erfinder: Scheele, Henry, 49377 Langförden (DE)
(74) Vertreter: Eisenführ Speiser

(57) **Zusammenfassung**

Die Erfindung betrifft eine Auf- und Abstiegshilfe (10) für Geflügeltiere, insbesondere Hühnerküken, zum Erreichen verschiedener Aufzuchtebenen (104, 104') an einer Aufzuchtvolliere (100), mit einem eine Trittfläche (14, 14') ausbildenden Rampenteil (12), welches zwischen einer im Wesentlichen horizontal ausgerichteten, ersten Position (P1) und einer um einen Winkel (α) zur ersten Position (P1) geneigten, zweiten Position (P2) hin- und herschwenkbar ist, wobei die Trittfläche (14') des Rampenteils (12) in zumindest der geneigten, zweiten Position (P2) eine Vielzahl an Trittstufen (20) aufweist.

## Beschreibung

Die Erfindung betrifft eine Auf- und Abstiegshilfe für Geflügeltiere, insbesondere Jungtiere, mit einem eine Trittfläche ausbildenden Rampenteil, welches zwischen einer im Wesentlichen horizontal ausgerichteten, ersten Position und einer um einen Winkel zur ersten Position geneigten, zweiten Positionen hin und her schwenkbar ist. Zudem betrifft die Erfindung auch eine Aufzuchtvolliere für Geflügel mit einem Rahmengestell und mehreren auf unterschiedlichen Höhen am Rahmengestell ausgebildeten Aufzuchtebenen.

Auf- und Abstiegshilfen sind im Stand der Technik bekannt und werden üblicherweise an Aufzuchtvollieren in Aufzuchtställen für Geflügeltiere, insbesondere Legehennen, eingesetzt. Für eine artgerechte Haltung werden die Geflügeltiere innerhalb der Aufzuchtställe in bevorzugt mehrgeschossigen Aufzuchtvollieren gehalten. Die Geflügeltiere, insbesondere Jungtiere, wie Hühnerküken oder dergleichen, finden auf den verschiedenen Ebenen innerhalb der Aufzuchtvolliere verschiedenste Versorgungseinrichtungen zur Nahrungs- und Flüssigkeitsaufnahme. Ferner können die Tiere sich zu Ruhezeiten in Ruhebereiche zurückziehen. Zudem wird die Aufzuchtvolliere typischerweise einige Wochen nach dem Einstallen der Hühnerküken geöffnet, damit diese auch in einen außerhalb der Aufzuchtvolliere liegenden Scharrraum gelangen können. Ein solcher Scharrraum, der häufig ein Stallboden ist, wird benötigt, um die Geflügeltiere zu beschäftigen und ihnen das natürliche Scharren zu ermöglichen.

Diese Haltungsform bringt es jedoch mit sich, dass die Aufzuchtebenen in der Aufzuchtvolliere gegenüber dem Stallboden ein erhöhtes Niveau aufweisen und auch untereinander auf insbesondere verschiedenen Höhenniveaus angeordnet sind. Speziell die nur wenige Tage alten Jungtiere benötigen um die verschiedenen Aufzuchtebenen und auch den Scharrraum erreichen zu können, Auf- und Abstiegshilfen, die es ihnen ermöglichen, sich ungestört zwischen den verschiedenen Aufzuchtebenen in der Aufzuchtvolliere oder von der Aufzuchtvolliere in den Scharrraum und wieder zurück in die Aufzuchtvolliere begeben zu können. Um die Bewegungsfreiheit der Tiere zu gewährleisten ist es bekannt, Auf- und Abstiegshilfen an einer Aufzuchtvolliere vorzusehen, die an das Alter und die damit verbundenen Bedürfnisse der Tiere angepasst werden können, aber auch gleichzeitig bei Bedarf eine vereinfachte Reinigung unterhalb der Auf- und Abstiegshilfen und damit neben bzw. vor den Aufzuchtvolieren ermöglichen.

Aus DE 20 2020 101 146 U1 ist bspw. eine Auf- und Abstiegshilfe für Geflügeltiere bekannt, die ein eine Trittfläche ausbildendes Rampenteil aufweist, welches zwischen einer im Wesentlichen horizontal ausgerichteten, ersten Position und einer um einen Winkel α zu ersten Position geneigten, zweiten Position hin und her schwenkbar ist. In der ersten Position, in der das Rampenteil im Wesentlichen horizontal ausgerichtet ist, bildet das Rampenteil an der Aufzuchtvolliere eine Zwischenebene aus, von der aus die Tiere dann in den Einstiegsbereich der Aufzuchtvolliere gelangen können. Zum Reinigen des Bereichs vor bzw. neben der Aufzuchtvolliere wird das Rampenteil aus der ersten Position etwa um 90° nach oben in die zweite Position bewegt. Hühnerküken, die wenige Tage alt sind, benötigen neben dem Rampenteil zusätzlich mit dem Rampenteil zusammenwirkende, daran angeordnete Rampenelemente um die Höhendifferenz zwischen zwei Aufzuchtebenen überbrücken zu können. Jedoch kann selbst das Überbrücken der Rampenelemente mit ihren schrägen Trittflächen die Hühnerküken mit einem Alter von wenigen Tagen noch vor gewisse Herausforderungen stellen. Bekannt sind weiterhin auch Leitern, die in einer geneigten Ebene verlaufen und Sprossen mit zwischen den Sprossen offen Teilbereichen haben, welche die Jungtiere vor ähnliche Schwierigkeiten stellen.

Daher liegt der Erfindung die Aufgabe zugrunde eine Auf- und Abstiegshilfe für Geflügeltiere bereitzustellen, mittels der eine sowohl effiziente als auch artgerechte Haltung von Jungtieren, insbesondere von Tagesküken, in einer Aufzuchtvolliere ermöglicht ist.

Die Erfindung löst die ihr zugrundeliegende Aufgabe bei einer Auf- und Abstiegshilfe für Geflügeltiere mit den Merkmalen nach Anspruch 1. Insbesondere weist die Trittfläche des Rampenteils in zumindest der geneigten, zweiten Position eine Vielzahl an Trittstufen auf.

Damit schlägt die Erfindung vor, das Rampenteil in seiner ersten Position, in der dieses im Wesentlichen horizontal ausgerichtet ist, auch weiterhin als eine Art Zwischenebene an einer Aufzuchtvolliere zu verwenden. Jedoch ist die Auf- und Abstiegshilfe in einer Höhe oberhalb des Stallbodens anzuordnen, in der diese das Reinigen des Stallbodens vor oder neben der Aufzuchtvolliere nicht behindert. Zudem ist entgegen der im Stand der Technik bekannten Lösung mittels des schwenkbaren Rampenteiles vorgeschlagen, dieses in seiner zweiten Position, in der das Rampenteil in einem Winkel α geneigt zu einer Horizontalen, insbesondere zu einer Aufzuchtebene oder dem Stallboden, verläuft, als ein zum Stallboden geneigt verlaufendes Begehelement bereitzustellen, das speziell für Jungtiere, insbesondere Tagesküken, auf vereinfachte Weise nutzbar ist. In der geneigten, zweiten Position bildet das Rampenteil eine Vielzahl an Trittstufen an der Trittfläche aus, die insbesondere von Tagesküken deutlich einfacher zum Überwinden eines Höhenunterschieds an der Aufzuchtvolliere genutzt werden kann. Dadurch lernen bereits die wenige Tage alten Küken frühzeitig ihren Bewegungsapparat zu trainieren. Vorzugsweise sind die Trittstufen in der geneigten Position des Rampenelements über die Gesamtlänge der Trittfläche ausgebildet.

Gemäß einer bevorzugten Weiterbildung ist die Trittfläche aus einer Vielzahl an Trittflächenelementen ausgebildet, welche dazu eingerichtet sind, in der horizontalen Position des Rampenteils eine im Wesentlichen ebene Trittfläche und in der zweiten Position, welche um einen Winkel α zur ersten Position geneigt ist, mit der Vielzahl an Trittstufen eine gestufte Trittfläche zu erzeugen. Das erfindungsgemäße Rampenteil kann somit in beiden Positionen bei der Aufzucht der Geflügeltiere eine nutzbringende Funktion an der Aufzuchtvolliere erfüllen. Vorzugsweise ist das Rampenteil mittels der Vielzahl an einzelnen Trittflächenelementen dazu eingerichtet, in seiner horizontalen Position ein flächiges Bodenelement an der Aufzuchtvolliere auszubilden. Das Rampenteil als Bodenelement kann dann Teil einer Aufzuchtebene sein. Vorzugsweise wird das Rampenteil in seiner zweiten, zur horizontalen Position um den Winkel α geneigten Position als Rampe mit einer bevorzugt durchgängig gestuften Trittfläche eingesetzt. Mittels einer solchen Rampe können die Geflügeltiere an der Aufzuchtvolliere vereinfacht die verschiedenen Aufzuchtebenen innerhalb der Aufzuchtvolliere erreichen bzw. bei geöffneter Aufzuchtvolliere von dieser ungehindert in den Scharrraum, wie bspw. einem Stallboden oder dergleichen, gelangen.

Eine Weiterbildung der Auf- und Abstiegshilfe sieht vor, dass die Trittfläche eine Vielzahl an Trittflächenelementen aufweist, welche derart beweglich am Rampenteil aufgenommen sind, dass jedes einzelne Trittflächenelement unabhängig von der Schwenkstellung des Rampenteils eine etwa waagerecht ausgerichtete Trittstufenfläche aufweist. Das zwischen der ersten und zweiten Position im Bedarfsfall hin und her schwenkbare Rampenteil weist mit den einzelnen Trittflächenelementen insbesondere eine stets an seine Neigung anpassbare Trittfläche auf. Die die Trittfläche ausbildenden Trittflächenelemente haben Trittstufenflächen bzw. -oberseiten, die unabhängig von der Neigung bzw. in jeder beliebigen Winkelposition des Rampenteils stets waagerecht verlaufen. Damit ist das Begehen eines bevorzugt geneigt ausgerichteten Rampenteils in jeder beliebigen Neigungsstellung bereits auch für Tagesküken möglich. Das erfindungsgemäße Rampenteil bildet mit seiner Vielzahl an Trittflächenelemente in seiner horizontalen Position eine nahezu durchgängige Trittfläche aus. Vorliegend ist unter dem Begriff "durchgehend" oder "durchgängig" nicht die vollständig geschlossene Ausgestaltung der Trittfläche, sondern lediglich das Ausbilden einer durchgängigen Ebene ohne einen Höhenversatz oder das Vorsehen größerer Aussparungen in der Trittfläche, die eine mögliche Verletzungsgefahr für die Geflügeltiere darstellen könnten, zu verstehen. Vorzugsweise weist das Rampenteil mehrere neben- und hintereinander angeordnete Reihen von einzelnen Trittflächenelementen zur Ausgestaltung der Trittfläche auf.

Gemäß einer bevorzugten Ausgestaltung der Erfindung ist vorgesehen, dass die Trittfläche selbst, wie auch die die Trittfläche am Rampenteil ausbildenden Trittflächenelemente eine Art Gitter- oder Stegstruktur mit einer Vielzahl von die Aufstandsebene der Trittfläche unterbrechenden Durchbrüchen aufweist. Damit ist gewährleistet, dass während der Aufzucht der Geflügeltiere anfallende Exkremente nicht auf der Trittfläche am Rampenteil liegen bleiben, sondern durch den offen ausgestalteten Charakter der Trittflächen in eine darunterliegende Kotauffangebene abgeführt werden. Vorzugsweise sind außenliegende Kanten an der als Gitter- oder Stegstruktur ausgebildeten Trittfläche bzw. an den Trittflächenelementen mit Abrundungen versehen, um der Ausgestaltung von scharfen Kanten an den Trittflächenelementen entgegenzuwirken.

Vorzugsweise weist das Rampenteil ein erstes Ende, an dem ein Schwenklager ausgebildet ist und ein zum ersten Ende entgegengesetzt angeordnetes zweites, um das Schwenklager schwenkbares Ende auf, welches vorzugsweise einen Verrastmechanismus zum Arretieren des Rampenteils in seiner horizontalen Position umfasst. Das Rampenteil, das in einer möglichen Ausgestaltung eine Länge l im Bereich von 0,6m bis etwa 1,5m und eine Breite b im Bereich von 0,15m bis 0,3m aufweisen kann, weist an seinem ersten Ende ein Schwenklager auf, um das das Rampenteil um einen Winkel α von mindestens 90° schwenkbar ausgebildet ist. Das erste Ende des Rampenteils ist bevorzugt ortsfest an einer Aufnahme an der Aufzuchtvolliere befestigbar ausgebildet. Das erste Ende des Rampenteils mit seinem Schwenklager bildet im montierten Zustand an der Aufzuchtvolliere einen Fixpunkt aus, um den das Rampenteil mit dem vorgegebenen Winkel α verschwenkt werden kann. Am zweiten Ende des Rampenteils ist ein Verrastmechanismus vorgesehen, mittels dem das Rampenteil in zumindest seiner horizontalen Position an der Aufzuchtvolliere zur Umsetzung eines waagerecht verlaufenden Bodenelements an einer Aufzuchtebene befestigt werden kann.

Gemäß einer bevorzugten Weiterbildung sind die Trittflächenelemente am Rampenteil mittels eines sich von einem/dem ersten zu einem/dem zweiten Ende des Rampenteils erstreckenden Koppelmechanismus beweglich miteinander verbunden. Der Koppelmechanismus ist insbesondere dazu eingerichtet, mit Verschwenken des Rampenteils sämtliche einzelnen Trittflächenelemente relativ zueinander zu bewegen. Vorzugsweise erfolgt mit dem Verschwenken des Rampenteils über den Koppelmechanismus eine synchrone Bewegung der Trittflächenelemente am Rampenteil. Mittels des Koppelmechanismus ist eine Parallelführung der Trittflächenelemente und damit die bevorzugt waagerechte Ausrichtung der Trittstufenfläche an den Trittflächenelementen des Rampenteils in jeder beliebigen Schwenkstellung zwischen der ersten horizontalen Position und der zweiten zur ersten Position um einen Winkel geneigten Position, also auch in jeder beliebigen einstellbaren Zwischenstellung bewirkt. Mittels des Koppelmechanismus wird die in der ersten horizontalen Position des Rampenteils ebene, nahezu geschlossene Trittfläche mit Bewegen des Rampenteils in die zweite geneigte Position in eine gestufte Trittfläche mit einer Vielzahl an Trittstufen umgewandelt. Vorzugsweise weist das Rampenteil in seiner Breitenrichtung mindestens zwei mit dem Koppelmechanismus verbundene Reihen von einzelnen Trittflächenelementen auf. In einer Ausführung weist das Rampenteil in seiner Längsrichtung mindestens zehn, vorzugsweise etwa zwanzig bis dreißig mit dem Koppelmechanismus verbundene Reihen einzelner Trittflächenelemente auf.

In einer bevorzugten Ausgestaltung der Auf- und Abstiegshilfe weist der Koppelmechanismus wenigstens zwei parallel zueinander ausgerichtete Stabelemente auf, welche jeweils endseitig über Haltelemente miteinander verbunden sind, und wobei jedes Trittflächenelement mit jedem der Stabelemente über je ein Drehlager gekoppelt ist. Die Stabelemente bilden die Basis des Koppelmechanismus für das erfindungsgemäße Rampenteil und die damit umgesetzte Parallelführung der Trittflächenelemente, welche unabhängig von der Schwenkstellung des Rampenteils um sein erstes Ende vorzugsweise stets parallel zueinander ausgerichtet sind. Zwei jeweils einander benachbarte Enden der Stabelemente sind über je ein Halteelement miteinander verbunden. Die Halteelemente sind derart ausgebildet, dass insbesondere die jeweils an einem Halteelement aufgenommenen Enden der Stabelemente eine Relativbewegung zueinander ausführen können. Sämtliche die Trittfläche am Rampenteil ausbildenden Trittflächenelemente sind mit jedem der Stabelemente über je ein Drehlager beweglich gekoppelt. Damit ist beim Verschwenken des Rampenteils und einer damit verbundenen Relativbewegung der beiden Stabelemente zueinander die bevorzugt synchrone Bewegung der Trittflächenelemente am Rampenteil bewirkt. Der Koppelmechanismus weist mindestens zwei Stabelemente auf, welche ein erstes Paar an Stabelementen definieren. Vorzugsweise umfasst der Koppelmechanismus in einer weiteren Ausführung ein zweites Paar an Stabelementen, das parallel versetzt zu dem ersten Paar an Stabelementen angeordnet ist. Mittels der bevorzugt vier Stabelemente weist das Rampenteil eine erhöhte Verwindungssteifigkeit auf. Bei der Verwendung von zwei Sätzen an Stabelementen sind die zueinander benachbart angeordneten Enden mit ein und demselben Halteelement verbunden. Vorzugsweise verläuft die Schwenkachse am ersten Ende des Rampenteils etwa quer zur Längsrichtung des Rampenteils und insbesondere zu den in Längsrichtung des Rampenteils verlaufenden Stabelementen des Koppelmechanismus.

Gemäß einer bevorzugten Ausgestaltung des Auf- und Abstiegshilfe ist jedes Stabelement mit einem seiner Enden mittels eines Drehlagers an einem der Halteelemente befestigt und das entgegengesetzt angeordnete Ende jedes Stabelements mittels einer Drehschiebeführung rotatorisch und translatorisch bewegbar an dem jeweils gegenüberliegend angeordneten Halteelement aufgenommen. Mittels der erfindungsgemäßen Verbindung der Stabelemente mit den jeweils an den Enden des Rampenelements angeordneten Halteelemente ist die nötige Relativbewegung der Stabelemente zueinander und damit die synchrone Bewegung der Trittflächenelemente beim Verstellen des Rampenteils bewirkt. Jedes Stabelement ist mit einem Ende über das Drehlager ausschließlich drehbar zum Halteelement ausgebildet, ansonsten aber ortsfest am Halteelement befestigt. Das entgegengesetzte Ende des Stabelements ist mittels einer Drehschiebeführung an dem weiteren Halteelement aufgenommen. Bevorzugt ist die Drehschiebeführung als eine Art Kurvenbahn an dem jeweiligen Halteelement ausgebildet. Das zweite in der Drehschiebeführung aufgenommene Ende des Stabelements ist beim Verstellen des Rampenteils zwischen der ersten und zweiten Position somit drehbar wie auch verschiebbar zum Halteelement aufgenommen.

Gemäß einer bevorzugten Weiterbildung der Auf- und Abstiegshilfe sind die Halteelemente, an denen je eines der beiden Stabelemente mittels eines/des Drehlagers befestigt ist, an jeweils entgegengesetzten Enden des Rampenteils angeordnet. Mit dem Anordnen der jeweils die Stabelemente ortsfest aber beweglich mit dem Halteelement verbindenden Drehlager an gegenüber liegenden Enden des Rampenteils werden auch die Drehschiebeführungen für je eines der Halteelemente ebenfalls an Halteelementen angeordnet, die an entgegengesetzten Enden des Rampenteils vorgesehen sind. Beim Verschwenken des Rampenteils von seiner ersten im Wesentlichen horizontalen Position in seine zweite geneigte Position sind die Stabelemente des Koppelmechanismus, an dem die Trittflächenelemente jeweils befestigt sind, vorzugsweise über den gesamten Bewegungsbereich des Rampenteils parallel zueinander ausgerichtet. Dabei kann sich zumindest der Abstand zwischen den Längsachsen der beiden Stabelemente wie auch die Position der beiden Stabelemente in axialer Richtung zueinander verändern, was die Verstellbewegung der Vielzahl an Trittflächenelementen am Rampenteil bewirkt.

Vorzugsweise ist ein am schwenkbaren Ende des Rampenteils angeordnetes Haltelement mit einem auf der Unterseite des Haltelements angeordneten Aufstellfuß ausgerüstet. Insbesondere beim Überführen des Rampenteils von seiner ersten im Wesentlichen horizontalen Position in seine zweite geneigte Position kann mit Erreichen der Endlage in der zweiten Position das Rampenteil einfach und sicher auf einem die zweite Position definierenden Untergrund, wie bspw. dem Stallboden oder einer der Aufzuchtebenen an der Aufzuchtvolliere, abgesetzt werden. Der Aufstellfuß bildet dabei vorzugsweise die Unterseite des Halteelements und eine insbesondere eben ausgebildete Aufstellfläche aus. Mittels des Koppelmechanismus mit seinen mindestens zwei sich in Längsrichtung des Rampenteils erstreckenden Stabelementen, der auch beide Halteteile miteinander verbindet, wird auch der Aufstellfuß ähnlich wie die Trittflächenelemente bei der Verstellbewegung des Rampenteiles derart bewegt, dass die Aufstellfläche am Aufstellfuß ebenfalls eine dauerhaft waagerechte Ausrichtung aufweist.

In einer bevorzugten Ausgestaltung bildet ein am ersten Ende des Rampenteils angeordnetes Haltelement das Schwenklager für das Rampenteil aus und/oder weist ein am zweiten, schwenkbaren Ende des Rampenteils angeordnetes Haltelement eine Handhabe zum Betätigen des daran angeordneten Verrastmechanismus auf. Vorzugsweise wird das Halteelement am ersten Ende des Rampenteils, an dem selbst das Schwenklager für das Rampenteil ausgebildet ist, ortsfest und damit unbeweglich an insbesondere einer Aufnahme an der Aufzuchtvolliere befestigt. Das am zweiten, schwenkbaren Ende des Rampenteils angeordnete Halteelement behält ebenfalls in jeder Stellung des Rampenteils seine identische Ausrichtung zum Haltelement am ersten Ende des Rampenteils bei, auch wenn sich die Position der Haltelemente relativ zueinander ändert. Vorzugsweise weisen beide an den jeweiligen Enden des Rampenteils angeordnete Halteelemente eine im Wesentlichen parallele Ausrichtung zueinander auf. Um das Rampenteil aus seiner ersten im Wesentlichen horizontalen Position heraus bewegen zu können, ist am zweiten Halteelement eine Handhabe in Form eines Auslösers zum Betätigen des am Halteelement angeordneten Verrastmechanismus vorgesehen. Damit ist eine einfache Freigabe des Verrastmechanismus zum Bewegen des Rampenteils aus seiner üblicherweise arretierten, ersten Position in Richtung der zweiten geneigten Position erzielt.

Gemäß einer bevorzugten Weiterbildung der Auf- und Abstiegshilfe weist die Trittfläche, vorzugsweise jedes Trittflächenelement, eine Gitterstruktur mit einer Maschenweite im Bereich von etwa 1,0 cm bis ungefähr 3 cm auf, bevorzugt von etwa 1,8 bis 2,5 cm, wobei vorzugsweise unabhängig von der Position des Rampenteils die Maschenweite zwischen zwei zueinander bewegbaren Trittflächenelementen mittels des die Trittflächenelemente verbindenden Koppelmechanismus unverändert bleibt. Mithilfe einer Art Gitter- oder Stegstruktur zur Ausbildung der Aufstandsfläche für die Geflügeltiere am Rampenteil mit einer Vielzahl von die Aufstandsfläche unterbrechenden Durchbrüchen ist speziell während der Aufzucht der Geflügeltiere bewirkt, dass anfallende Exkremente nicht dauerhaft auf der Trittfläche bzw. den einzelnen Trittflächenelementen des Rampenteils liegen bleiben. Durch den zumindest bereichsweise durchlässigen Charakter der Trittfläche bzw. der Trittflächenelemente können die Exkremente in einer Auffangebene gesammelt werden. Zudem ist durch die gewählte Maschenweite von etwa 1,0 cm bis ungefähr 3 cm zwischen den einzelnen, parallel und quer zueinander verlaufenden Stegen oder Stäben der Gitterstruktur bewirkt, dass diese speziell für Jungtiere, wie Hühnerküken, eine sichere Aufstandsfläche definiert wird, um Verletzungen der Jungtiere an deren Füßen entgegenzuwirken.

In einer möglichen Ausgestaltung ist vorgesehen, dass die Maschenweite zwischen zwei zueinander bewegbaren Trittflächenelementen, welche bevorzugt jeweils aus mehreren parallel und quer zueinander verlaufenden Stegen oder Stäben ausgebildet sind, unabhängig von der Position des Rampenteils, also sowohl in der horizontal ausgerichteten, ersten Position als auch in der zur ersten Position geneigten, zweiten Position, mittels des die Trittflächenelemente verbindenden Koppelmechanismus unverändert bleibt. Damit ist speziell in der zur horizontalen, geneigten Ausrichtung des Rampenteils vermieden, dass bei einer damit verbundenen stufenförmigen Ausgestaltung der Trittfläche die Jungtiere nicht in mögliche Spalte zwischen benachbarte, aber in der Höhe zueinander versetzt angeordnete Trittflächenelemente geraten und sich dadurch verletzen könnten. Ferner weisen außenliegenden Kanten der Gitterstruktur vorzugsweise Abrundungen auf, um mögliche Schnittverletzungen an den Füßen der Geflügeltiere, insbesondere Jungtiere, zu vermeiden, bestenfalls zu verhindern.

In einem zweiten Aspekt betrifft die Erfindung eine Auf- und Abstiegshilfe für Geflügeltiere, insbesondere Hühnerküken, zum Erreichen verschiedener Aufzuchtebenen an einer Aufzuchtvoliere, mit einem eine Trittfläche ausbildenden Rampenteil, welches zwischen einer im Wesentlichen horizontal ausgerichteten, ersten Position und einer um einen Winkel zur ersten Position geneigten, zweiten Position hin und her schwenkbar ist.

Die Erfindung löst die ihr zugrundeliegende Aufgabe an einer Auf- und Abstiegshilfe für Geflügeltiere mit den Merkmalen nach Anspruch 12. Insbesondere ist vorgesehen, dass das die Auf- und Abstiegshilfe weiter dazu eingerichtet ist, zwischen einem ersten Betriebszustand l und einem zweiten Betriebszustand II hin und her geschaltet zu werden, wobei die Trittfläche des Rampenteils im ersten Betriebszustand l in der geneigten, zweiten Position eine Vielzahl an Trittstufen aufweist, und wobei die Trittfläche des Rampenteils im zweiten Betriebszustand II in der geneigten, zweiten Position eine ebene Trittfläche aufweist. Damit schlägt die Erfindung in einem zweiten Aspekt vor, das Rampenteil derart auszubilden, dass es in seiner zweiten, geneigten Position einerseits, nämlich im ersten Betriebszustand, eine gestufte Trittfläche mit einer Vielzahl an Trittstufen, und andererseits, nämlich im zweiten Betriebszustand, eine ebene Trittfläche ausbilden kann. Speziell für Tagesküken kann das Erklimmen eines Rampenteils mit einer schrägen, aber ebenen Trittfläche einfacher zu realisieren sein, als eine stufenförmig ausgeführte Trittfläche mit Stufen, deren Abstand zu Beginn der Aufzucht noch zu groß ist. Durch die entsprechend erfindungsgemäße Ausgestaltung kann die Auf- und Abstiegshilfe mit ihrem sowohl schwenkbar als auch zwischen zwei Betriebszuständen überführbaren Rampenteil vielseitiger eingesetzt werden.

Gemäß einer bevorzugten Weiterbildung des zweiten Aspekts ist vorgesehen, dass die Auf- und Abstiegshilfe gemäß den zur Auf- und Abstiegshilfe gemäß dem ersten Aspekt beschriebenen, bevorzugten Weiterbildungen oder Ausführungsformen ausgebildet ist.

Mit anderen Worten sind vorzugsweise die in den kennzeichnenden Teilen der Ansprüche 2-11 genannten Merkmale bevorzugte Weiterbildungen der Auf- und Abstiegshilfe gemäß dem zweiten Aspekt der Erfindung. Die entsprechenden Ausführungen werden zur Vermeidung von Wiederholungen hier mit einbezogen.

Vorzugsweise ist zusätzlich zur einem/dem am ersten Ende des Rampenteils, bevorzugt an einem Halteelement des Rampenteils, ausgebildeten Schwenklager ein weiteres Schwenklager ausgebildet, mittels dem das Halteelement, welches das erste Ende des Rampenteils definiert, schwenkbar mit einer Halteeinrichtung verbunden ist. Weiter vorzugsweise ist dem Schwenklager ein Arretiermechanismus zum Sperren und Freigeben des zweiten Schwenklagers zugeordnet. Die Auf- und Abstiegshilfe gemäß dem zweiten Aspekt macht sich ebenfalls die zum ersten Aspekt beschriebenen Merkmale und damit verbundenen Vorteile zunutze, wie beispielsweise die unabhängig von der Schwenkstellung des Rampenteils waagerecht ausrichtbaren Trittstufenflächen der einzelnen Trittflächenelemente, den die Trittflächenelemente beweglich miteinander verbindenden Koppelmechanismus, oder den zum Verstellen des Rampenteils vorgesehenen Verrastmechanismus am zweiten Ende des Rampenteils bzw. die Ausgestaltung der Trittfläche als eine Art Gitter- oder Stegstruktur.

In einer bevorzugten Ausführungsform ist am ersten Ende des Rampenteils zusätzlich zu dem daran angeordneten Halteelement eine Halteeinrichtung vorgesehen, wobei das das erste Ende des Rampenteils definierende Halteelement über ein weiteres Schwenklager beweglich an der Halteeinrichtung angelenkt ist. Mittels Verschwenken des Rampenteils um das Schwenklager, welches das Halteelement und das Rampenteil bewegbar miteinander koppelt, was bevorzugt ausschließlich im ersten Betriebszustand möglich ist, erfolgt mit dem Verbringen des Rampenteils in die geneigte Position das Ausbilden der gestuften Trittfläche bzw. einer Vielzahl an Trittstufen an der Trittfläche des Rampenteils. Mittels Verschwenken des Rampenteils um das Schwenklager, welches die Halteeinrichtung und das Halteelement miteinander koppelt, was bevorzugt ausschließlich im zweiten Betriebszustand möglich ist, verbleibt mit dem Verbringen des Rampenteils in die geneigte, zweite Position die Trittfläche des Rampenteils in ihrer ebenen Ausgestaltung. Das Schwenklager, welches das Halteelement und das Rampenteil miteinander verbindet, und das Schwenklager, welches die Halteeinrichtung mit dem Halteelement verbindet, haben Schwenkachsen, die parallel zueinander ausgerichtet sind und im Betrieb der erfindungsgemäßen Auf- und Abstiegshilfe innerhalb einer Aufzuchtvoliere eine im Wesentlichen horizontale Ausrichtung aufweisen. Die Halteeinrichtung bildet im montierten Zustand der Auf- und Abstiegshilfe vorzugsweise einen feststehenden Trittflächenabschnitt an einer Aufzuchtvolliere aus.

In einer bevorzugten Ausgestaltung ist dem weiteren, die Halteeinrichtung und das Halteelement verbindende Schwenklager ein Arretiermechanismus zum Sperren und Freigeben des zweiten Schwenklagers zugeordnet. Mittels des Arretiermechanismus kann das Bewegen des Rampenteils zum weiteren Schwenklager gesperrt oder freigegeben werden. Vorzugsweise wird mittels des Arretiermechanismus die Bewegung des Halteelementes relativ zur Halteeinrichtung gesperrt oder freigegeben. Vorzugsweise weist der Arretiermechanismus einen Arretierstift auf, mittels dem die Relativbewegung zwischen Halteeinrichtung und Halteelement blockiert oder zugelassen wird. In einer alternativen Ausgestaltung umfasst der Arretiermechanismus ein speziell in den Schwenkweg des Halteelements einsetzbares und daraus entnehmbares Arretierteil, das in seiner eingesetzten Stellung die Relativbewegung zwischen Halteeinrichtung und Halteelement behindert. Ist das Arretierteil in seiner Arretierstellung zwischen Halteeinrichtung und Halteelement, ist die Relativbewegung zwischen Halteeinrichtung und Halteelement behindert und das Rampenteil somit im Betriebszustand I; Rampenteil mit gestufter Trittfläche. Ist das Arretierteil aus seiner Arretierstellung zwischen Halteeinrichtung und Halteelement entfernt, ist die Relativbewegung zwischen Halteeinrichtung und Halteelement freigegeben und das Rampenteil somit im Betriebszustand II; Rampenteil mit ebener Trittfläche.

Am Schwenklager, welches zwischen Halteelement und Rampenteil ausgebildet ist, ist ein solcher Arretiermechanismus nicht erforderlich, da der die Trittflächenelemente am Rampenteil beweglich miteinander verbindende Koppelmechanismus vergleichsweise schwergängig ist. Sofern beide Schwenklager drehbeweglich sind, führen bei einer auf das Rampenteil wirkenden Verstellkraft ausschließlich die Halteeinrichtung und das Halteelement über das weitere Schwenklager eine Relativbewegung zueinander aus. Der Koppelmechanismus hat eine selbsthemmende Funktion, die bevorzugt überwunden wird, wenn das Schwenklager, welches Halteeinrichtung und Halteelement miteinander verbindet, blockiert ist, und erst dann mit Verschwenken des Rampenteils die stufenförmige Trittfläche bzw. an der Trittfläche die Vielzahl an Trittstufen ausgebildet wird. Jedoch kann bei entriegeltem Arretiermechanismus, unabhängig von der Stellung des Rampenteils (in horizontal Richtung verlaufend oder dazu geneigt) die Trittfläche gezielt zwischen ihrer ebenen Ausrichtung in eine gestufte Ausrichtung, also mit einer Vielzahl an Trittstufen, hin und her geschaltet werden.

Die Erfindung betrifft gemäß einem dritten Aspekt eine Aufzuchtvolliere für Geflügel, mit einem Rahmengestell und mehreren auf unterschiedlichen Höhen am Rahmengestell ausgebildeten Aufzuchtebenen.

Die Erfindung löst auch die bei der erfindungsgemäßen Auf- und Abstiegshilfe zugrunde gelegte Aufgabe, indem an der Aufzuchtvolliere mindestens eine Auf- und Abstiegshilfe gemäß einer der vorstehend beschriebenen bevorzugten Ausführungsformen der Erfindung vorgesehen ist. Mit einer derartig erfindungsgemäß ausgerüsteten Aufzuchtvolliere ist die Aufzucht von Geflügeltieren, insbesondere von Hühnerküken, von Beginn an vereinfacht. Mit der erfindungsgemäßen Auf- und Abstiegshilfe können selbst nur einen Tag alte Hühnerküken sich problemlos und auf sichere Weise zwischen den verschiedenen Aufzuchtebenen der Aufzuchtvolliere hin und her bewegen. Damit wird durch das Trainieren des Bewegungsapparats die physische Struktur der Geflügeltiere bereits ab Tag 1 in einer solchen Aufzuchtvolliere gefordert und gefördert und somit das Wohlbefinden der innerhalb einer solch erfindungsgemäßen Aufzuchtvolliere gehaltenen Geflügeltiere insgesamt verbessert.

Gemäß einem weiteren Aspekt betrifft die Erfindung die Verwendung einer Auf- und Abstiegshilfe gemäß einer der vorstehend beschriebenen bevorzugten Ausführungsformen in einer Aufzuchtvolliere für Geflügel in einer im Wesentlichen horizontalen, ersten Position als Bodenelement einer Aufzuchtebene und in einer um einen Winkel zur ersten Position geneigten, zweiten Position als eine mehrere Aufzuchtebenen miteinander verbindende Rampe. Mit der erfindungsgemäßen Ausgestaltung ist es möglich, eine erfindungsgemäße Auf- und Abstiegshilfe für Geflügeltiere mit ihrem schwenkbeweglich angeordneten Rampenteil statt ausschließlich für das Überwinden von Höhenunterschieden innerhalb der Aufzuchtvolliere zu verwenden, im Falle einer gewünschten Trennung der verschiedenen Aufzuchtebenen an der Aufzuchtvolliere untereinander, durch einfaches Verschwenken der Rampenteile aus ihrer zweiten geneigten Position in die erste, im Wesentlichen horizontal ausgerichtete Position, als ein horizontal verlaufendes Bodenelement einer einzelner Aufzuchtebene umzufunktionieren. Dabei ist an dem erfindungsgemäß ausgebildeten Rampenteil bewirkt, dass dieses in seiner ersten, horizontal ausgerichteten Position eine im Wesentlichen ebene Trittfläche und in der zweiten, geneigten Position eine gestufte Trittfläche mit einer Vielzahl an Trittstufen oder eine ebene Trittfläche definiert.

Die zu den erfindungsgemäßen Auf- und Abstiegshilfen beschriebenen, bevorzugten Ausführungsformen bzw. Weiterbildungen sind zugleich auch bevorzugten Ausführungsformen der erfindungsgemäßen Aufzuchtvolliere sowie der erfindungsgemäßen Verwendung einer solchen Auf- und Abstiegshilfe. Die zur erfindungsgemäßen Aufzuchtvolliere bzw. zur Verwendung der Auf- und Abstiegshilfe beschriebenen bevorzugten Ausführungsformen bzw. Weiterbildungen, welche sich auf die Auf- und Abstiegshilfe selbst beziehen, sind zugleich auch bevorzugte Ausführungsformen der Auf- und Abstiegshilfe.

Die Erfindung wird im Folgenden anhand eines bevorzugten Ausführungsbeispiel unter Bezugnahme auf die beigefügten Figuren näher beschrieben. Hierbei zeigen:
- Fig. 1:: eine perspektivische Ansicht einer erfindungsgemäßen Auf- und Abstiegshilfe für Geflügeltiere in einer ersten im Wesentlichen horizontalen Position;
- Fig. 2:: eine perspektivische Ansicht der Auf- und Abstiegshilfe in einer um einen Winkel zur ersten Position geneigten, zweiten Position;
- Fig. 3:: eine Vorderansicht der Auf- und Abstiegshilfe in der ersten Position;
- Fig. 4:: eine Vorderansicht der Auf- und Abstiegshilfe in der zweiten Position;
- Fig. 5:: eine Vorderansicht der erfindungsgemäßen Auf- und Abstiegshilfe in einer Zwischenposition;
- Fig. 6:: eine perspektivische Ansicht einer erfindungsgemäßen Aufzuchtvolliere mit einer Auf- und Abstiegshilfe nach Fig.1;
- Fig. 7:: eine Vorderansicht der Aufzuchtvolliere nach Fig. 6;
- Fig. 8:: eine perspektivische Ansicht einer erfindungsgemäßen Auf- und Abstiegshilfe gemäß einer weiteren Ausführungsform in einer ersten Position;
- Fig. 9: eine perspektivische Ansicht der Auf- und Abstiegshilfe nach Fig. 8 in einer um einen Winkel zur ersten Position geneigten, zweiten Position und einem ersten Betriebszustand, und
- Fig. 10: eine Vorderansicht der Auf- und Abstiegshilfe nach Fig. 9 in der zweiten Position und einem zweiten Betriebszustand.

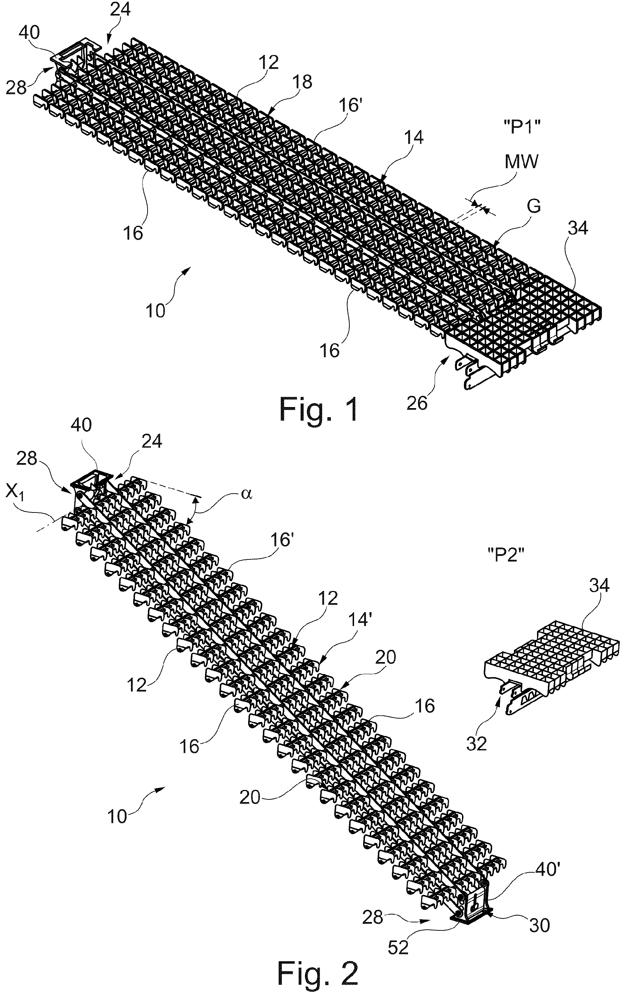

Fig. 1 zeigt eine Auf- und Abstiegshilfe 10 für Geflügeltiere, insbesondere Hühnerküken. Die Auf- und Abstiegshilfe 10 umfasst ein Rampenteil 12, welches eine Trittfläche 14 für die das Rampenteil 12 passierenden Geflügeltiere ausbildet. Zudem ist das Rampenteil 12 von einer ersten in Fig. 1 gezeigten, im Wesentlichen horizontal ausgerichteten Position P1 in eine um einen Winkel α zur ersten Position geneigten, zweiten Position P2 bewegbar. Insbesondere ist das Rampenteil 12 zwischen der ersten Position P1 und der zweiten Position P2 hin und her verschwenkbar ausgebildet.

Wie aus Fig. 1 ferner ersichtlich, ist die Trittfläche 14 aus einer Vielzahl an Trittflächenelementen 16, 16' ausgebildet, welche dazu eingerichtet sind, in der horizontalen Position P1 des Rampenteils 12 eine im Wesentlichen ebene Trittfläche 14 zu erzeugen. Die eben Trittfläche 14 ist in der horizontalen Position P1 des Rampenteils 12 nahezu durchgängig ausgebildet, auch wenn an der Trittfläche 14 bzw. den Trittflächenelementen 16, 16' selbst eine Vielzahl an Durchbrüchen 18 vorgesehen ist, durch die bei der Aufzucht der Geflügeltiere entstehende Exkremente sich durch die Trittfläche 14 hindurchbewegen können.

Fig. 2 zeigt die erfindungsgemäße Auf- und Abstiegshilfe 10 mit ihrem Rampenteil 12 in der um den im Winkel α zu ersten Position P1 geneigten, zweiten Position P2. Dabei wird ersichtlich, dass die Trittfläche 14 des Rampenteils 12 in der geneigten, zweiten Position P2 eine Vielzahl an Trittstufen 20 für die das Rampenteil 12 passierenden Geflügeltiere ausbildet. Insbesondere sind die die Trittfläche 14 ausbildenden Trittflächenelemente 16, 16' dazu eingerichtet, in der zweiten Position P2 mittels der Vielzahl an Trittstufen 20 eine gestufte Trittfläche 14' zu erzeugen.

Wie aus den Figuren 1 und 2 ferner zu entnehmen, weist das Rampenteil 12 ein erstes Ende 24 und ein zum ersten Ende 24 entgegengesetzt angeordnetes, zweites Ende 26 auf. Am ersten Ende 24 ist ein Schwenklager 28 ausgebildet, um welches das zweite Ende 26 herum schwenkbar ist. Am zweiten Ende 26 ist ein Verrastmechanismus 30 vorgesehen, mittels dessen das Rampenteil 12 in der in Fig. 1 gezeigten horizontalen Position P1 an einer Aufnahme 32 eines feststehenden Flächenelementes 34 der Auf- und Abstiegshilfe 10 arretiert wird.

In einer Ausgestaltung sind die Trittflächenelemente 16, 16' mittels eines sich vom ersten zum zweiten Ende des Rampenteils 12 erstreckenden Koppelmechanismus 36 beweglich miteinander verbunden. Der Koppelmechanismus 36 ist vorzugsweise dazu eingerichtet mit Verschwenken des Rampenteils 12 sämtliche Trittflächenelemente 16, 16' relativ zueinander zu bewegen. Insbesondere werden sämtliche Trittflächenelemente 16, 16' beim Bewegen des Rampenteils 12 zwischen der ersten und zweiten Position P1, P2 synchron zueinander bewegt.

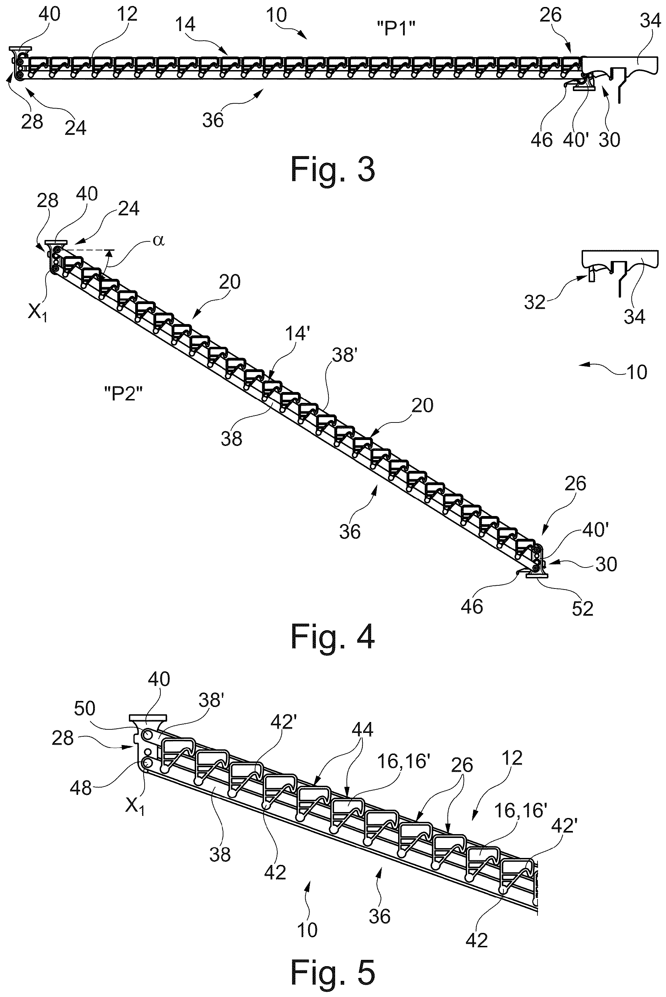

Wie weiter aus Fig. 2 ersichtlich, weist der Koppelmechanismus 36 wenigstens zwei parallel zueinander ausgerichtete Stabelemente 38, 38' auf, die jeweils endseitig über Halteelemente 40, 40' miteinander verbunden sind. Wie den Figuren 2-5 zu entnehmen ist, ist jedes Trittflächenelement 16, 16' mit jedem der Stabelemente 38, 38' über je ein Drehlager 42, 42' gekoppelt. Beim Verschwenken des Rampenteils 12 und dem damit einhergehenden Bewegen der Stabelemente 40, 40' um das Schwenklager 28 am ersten Ende 24 ist über die Drehlager 42, 42' die Relativbewegung der Trittflächenelemente 16, 16' zu den Stabelementen und der Trittflächenelemente 16, 16' untereinander umgesetzt. Die Trittflächenelemente 16, 16' an der Trittfläche 14 sind derart beweglich am Rampenteil 12, insbesondere mittels des Koppelmechanismus 36, aufgenommen, dass jedes einzelne Trittflächenelement 16, 16', wie aus den Figuren 3-5 ferner ersichtlich, unabhängig von der Schwenkstellung des Rampenteils 12 eine etwa waagerecht ausgerichtete Trittstufenfläche 44 aufweist.

Die Halteelemente 40, 40' sind an entgegengesetzten Enden des Rampenteils 12 angeordnet, wobei am ersten Ende 24 des Rampenteils 12 das Halteelement 40 vorgesehen ist, welches in der vorliegend gezeigten Ausführung das Schwenklager 28 für das Rampenteil 12 ausbildet. Das Schwenklager 28 weist eine Schwenkachse X₁ auf, welche im montierten Zustand der Auf- und Abstiegshilfe 10 an einer Aufzuchtvolliere 100 im Wesentlichen horizontal und etwa senkrecht zur Längserstreckung des Rampenteils 12 ausgerichtet ist. Das weitere Halteelement 40' ist insbesondere am zweiten, schwenkbaren Ende 26 des Rampenteils 12 angeordnet, an dem der Verrastmechanismus 30 zum Arretieren des Rampenteils 12 und eine mit dem Verrastmechanismus 30 zusammenwirkende Handhabe 46 zum Betätigen des Verrastmechanismus 30 vorgesehen ist.

An jedem der Haltelemente 40, 40' ist eines der Stabelemente 38, 38' mittels eines Drehlagers 48 drehbar befestigt. Ferner ist an jedem Haltelement 40, 40' das Ende des jeweils anderen Stabelements 38, 38' mittels einer Drehschiebeführung 50 sowohl rotatorisch als auch translatorisch bewegbar am Halteelement 40, 40' aufgenommen. Somit ist das Stabelement 38 mit einem Ende über das Drehlager 48 mit dem Halteelement 40 am ersten Ende 24 des Rampenteils 12 und mit seinem entgegengesetzten Ende über die Drehschiebeführung 50 mit dem Halteelement 40' am zweiten Ende 26 des Rampenteils 12 verbunden.

Das Stabelement 38' ist hingegen mit einem Ende über das Drehlager 48 mit dem Halteelement 40' am zweiten Ende 26 des Rampenteils 12 und mit seinem entgegengesetzten Ende über die Drehschiebeführung 50 mit dem Halteelement 40 am ersten Ende 24 des Rampenteils 12 verbunden. Beide Stabelemente 38, 38' sind demnach mit einem ihrer Enden mit einem der Halteelemente 40, 40' mittels des Drehlagers 48 befestigt, die an jeweils entgegengesetzten Enden 24, 26 des Rampenteils 12 angeordnet sind.

Wie ferner Fig. 2 und 4 zu entnehmen, ist am Halteelement 40' ein auf der Unterseite des Halteelements 40' vorstehender Aufstellfuß 52 vorgesehen, der am schwenkbaren, zweiten Ende 26 des Rampenteils 12 angeordnet ist. Wie die Figuren 2-5 ferner verdeutlichen, bildet das Halteelement 40 am ersten Ende 24 des Rampenteils 12 einen ortsfest aufgenommenen Fixpunkt aus, dem gegenüber das Haltelement 40' am zweiten Ende 26 des Rampenteils 12 bewegbar ausgebildet ist. Die Halteelemente 40, 40' an den entgegengesetzten Enden 24, 26 des Rampenteils 12 weisen unabhängig von der Stellung des Rampenteils 12 jeweils eine feste im Wesentlichen parallele Ausrichtung zueinander auf, wodurch im Zusammenhang mit dem Koppelmechanismus 36 die bevorzugt waagerechte Ausrichtung der Trittstufenflächen 44 an jedem der Trittflächenelemente 16, 16' in sämtlichen Schwenkstellungen des Rampenteils 12 erreicht ist.

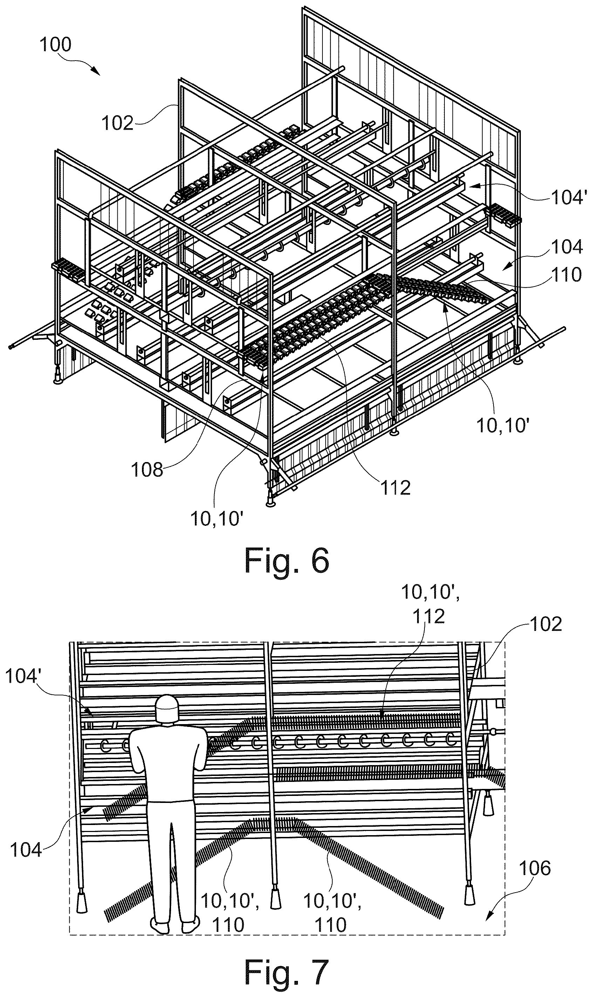

Die Figuren 6 und 7 zeigen Abbildungen einer erfindungsgemäßen Aufzuchtvolliere 100 für Geflügeltiere mit einem Rahmengestellt 102 und mehreren auf unterschiedlichen Höhen am Rahmengestell 102 ausgebildeten Aufzuchtebenen 104, 104'. Mittels der erfindungsgemäßen Auf- und Abstiegshilfe 10 mit ihren in der geneigten Position P2 an der Trittfläche 14' des Rampenteils 12 in einer Vielzahl ausgebildeten Trittstufen 20 können sich die Geflügeltiere sicher und vor allem vereinfacht zwischen den verschiedenen Aufzuchtebenen 104, 104' bewegen. Auch können mittels der erfindungsgemäßen Auf- und Abstiegshilfe 10, wie Fig. 7 zeigt, die Geflügeltiere sich von der unteren Aufzuchtebene 104 in den Scharrraum 106 vor der Aufzuchtvolliere 100 begeben.

Jede erfindungsgemäße Auf- und Abstiegshilfe 10 mit ihrem Rampenteil 12, welches in der vorliegend gezeigten Ausführung mit einem mit dem zweiten, schwenkbaren Ende 26 des Rampenteils 12 koppelbaren Flächenelement 34 zusammenwirkt, kann vergleichsweise einfach an einer horizontal verlaufenden Strebe 108 des Rahmengestells 102 montiert werden. Die erfindungsgemäße Auf- und Abstiegshilfe 10 erfüllt an der Aufzuchtvolliere 100 eine Doppelfunktion. Zum einen dient die Auf- und Abstiegshilfe 10 in ihrer zweiten, geneigten Position P2 als Rampe für die Geflügeltiere, so dass sich diese zwischen den verschiedenen Aufzuchtebenen 104, 104' bewegen können, und in der ersten, im Wesentlichen horizontalen Position P1 dient diese als ein die verschiedenen Aufzuchtebene 104, 104' an der Aufzuchtvolliere 100 voneinander trennendes Bodenelement 112. In einer Ausführungsform weist die erfindungsgemäße Aufzuchtvolliere 100 einen oder mehrere der nachfolgend beschriebenen Auf- und Abstiegshilfe 10' für Geflügeltiere auf.

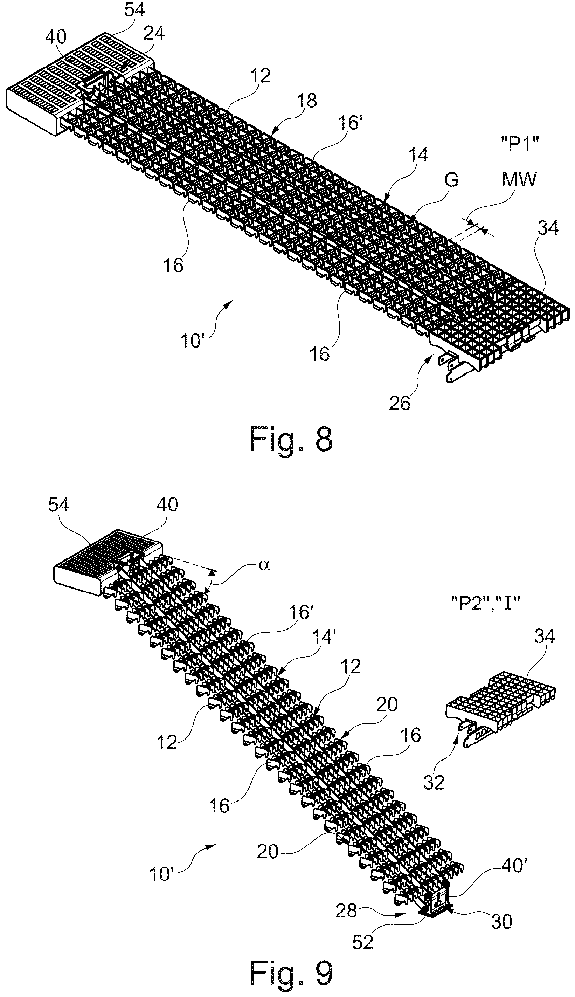

Fig. 8 zeigt eine alternative Ausgestaltung einer Auf- und Abstiegshilfe 10' für Geflügeltiere, insbesondere Hühnerküken. Die Auf- und Abstiegshilfe 10' umfasst ein Rampenteil 12, welches eine Trittfläche 14 für die das Rampenteil 12 passierenden Geflügeltiere ausbildet. Zudem ist das Rampenteil von einer ersten in Fig. 8 gezeigten, im Wesentlichen horizontal ausgerichteten Position P1 in eine um einen Winkel α zur ersten Position geneigten, zweiten Position P2 bewegbar, siehe Fig. 9. Das Rampenteil 12 ist zwischen der ersten Position P1 und der zweiten Position P2 hin und her verschwenkbar ausgeführt.

Auch die Trittfläche 14 des Rampenteils 12 der Auf- und Abstiegshilfe 10' weist eine Vielzahl an Trittflächenelementen 16, 16' auf, welche dazu eingerichtet sind, in der horizontalen Position P1 des Rampenteils 12 eine im Wesentlichen ebene Trittfläche 14 zu erzeugen. Ferner ist die Trittfläche 14 am Rampenteil 12 der Auf- und Abstiegshilfe 10' dazu eingerichtet, wie Fig. 9 verdeutlicht, in der geneigten zweiten Position P2 eine gestufte Trittfläche 14' bzw. eine Trittfläche 14' mit einer Vielzahl an Trittstufen 20 auszubilden.

Die Auf- und Abstiegshilfe 10' ist nahezu identisch zu der in den Fig. 1 bis 5 gezeigten Ausführung der Auf- und Abstiegshilfe 10 ausgebildet, weshalb zur Vermeidung unnötiger Wiederholungen, auf die zu den obigen zur Aufstiegshilfe 10 wie auch zur Aufzuchtvoliere 100 gemachten Ausführungen, betreffend die Ausgestaltung der Trittflächenelemente 16, 16', den die Trittflächenelemente 16, 16' verbindenden Koppelmechanismus 36 und die das Rampenteil 12 in der ersten horizontalen Position P1 festlegenden Verrastmechanismus 30 verwiesen wird.

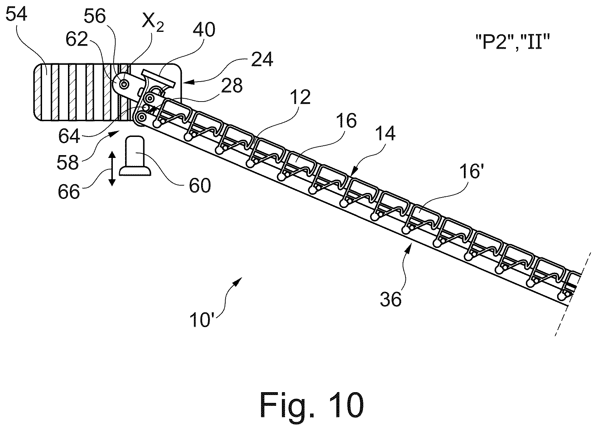

Zusätzlich ist die Auf- und Abstiegshilfe 10'beispielsweise in der zweiten Position P2 mit der geneigten Ausrichtung des Rampenteils 12 dazu eingerichtet, zwischen einem in Fig.9 gezeigten, ersten Betriebszustand I und einem in Fig.10 gezeigten, zweiten Betriebszustand II hin und her geschaltet zu werden. Mit Verschwenken des Rampenteils 12 im ersten Betriebszustand I bildet die Trittfläche des Rampenteils 12 in der geneigten, zweiten Position P2 die gestufte Trittfläche 14' mit der Vielzahl an Trittstufen 20 aus. Im zweiten Betriebszustand II, gezeigt in Fig.10, bildet die Trittfläche des Rampenteils 12 in der ebenfalls geneigten, zweiten Position P2 dann eine ebene Trittfläche 14 aus.

Das Ausbilden der zwei Betriebszustände I, II ist insbesondere durch eine zusätzlich am ersten Ende 24 des Rampenteils 12 angeordnete Halteeinrichtung 54 und ein die Halteeinrichtung 54 mit dem Halteelement 40 am ersten Ende 24 des Rampenteils 12 verbindendes Schwenklager 56 verwirklicht. Das Schwenklager 56 ist an einem oder mehreren am Halteelement 40 abstehenden Kragarmen 62 (Fig.10) ausgebildet und weist eine Schwenkachse X₂ auf, welche parallel zur Schwenkachse X₁ des das Halteelement 40 mit dem Rampenteil 12 verbindenden Schwenklager 28 verläuft. In einer Ausführung ist die Halteeinrichtung 54 im montierten Zustand der Auf- und Abstiegshilfe 10' Teil eines feststehenden Trittflächenabschnitts an einer Aufzuchtvolliere 100.

Um die Auf- und Abstiegshilfe 10' bzw. das Rampenteil 12 zwischen dem in Fig. 9 gezeigten, ersten Betriebszustand I mit seiner gestuften Trittfläche 14' und einem in Fig. 10 gezeigten, zweiten Betriebszustand II mit einer ebenen Trittfläche 14 hin und her schalten zu können, ist dem die Halteeinrichtung 54 und das Halteelement 40 miteinander verbindenden Schwenklager 56 ein Arretiermechanismus 58 zugeordnet. Mittels des Arretiermechanismus 58 wird das Bewegen des Schwenklagers 56, insbesondere die Relativbewegung zwischen der Halteeinrichtung 54 und dem Halteelement 40, gesperrt oder freigegeben.

Der Arretiermechanismus 58 weist in der vorliegend in Fig. 10 gezeigten Ausführung ein in den Bewegungsbereich zwischen Halteeinrichtung 54 und Halteelement 40 einsetzbares und daraus entnehmbares, entlang einer Arretier- oder Entriegelungsbewegung (Pfeil 66) relativ zur Halteeinrichtung 54 bewegbares Arretierteil 60 auf. In der Freigabestellung (Fig. 10) bleibt mit Verschwenken des Rampenteils 12 die Trittfläche 14 üblicherweise in der ebenen Ausgestaltung. Bei entriegeltem Arretierteil 60 kann unabhängig von der Stellung des Rampenteils (horizontal oder geneigt ausgerichtet) durch eine gezielte Krafteinleitung die Selbsthemmung des Koppelmechanismus 36 überwunden und die Trittfläche 14 von ihrer ebenen Ausrichtung in die Trittfläche 14' mit einer Vielzahl an Trittstufen 20 überführt werden. In Fig. 9 ist das Arretierteil 60, was aber nicht im Detail zu sehen ist, in seiner Arretierstellung zwischen der zwischen Halteeinrichtung 54 und dem Halteelement 40 angeordnet. Mit Verschwenken des Rampenteils 12 wird dann die Trittfläche 14' mit der Vielzahl an Trittstufen 20 ausgebildet.

In einer nicht näher gezeigten Ausgestaltung kann der Arretiermechanismus 58 auch einen Arretierstift aufweisen, der durch Einführen in eine durch die Halteeinrichtung 54 und das Haltelement 40 definierte Aufnahme, das Bewegen des Halteelements 40, ausgehend von der horizontalen Ausrichtung des Rampenteils 12 und relativ zur Halteeinrichtung 54, sperrt bzw. behindert.

Fig. 10 zeigt das Rampenteil 12 der Auf- und Abstiegshilfe 10' in der geneigten, zweiten Position P2, bei entriegeltem bzw. freigegebenem Arretiermechanismus 58, sodass das Halteelement 40 sich relativ zur Halteeinrichtung 54 bewegen kann, also die Auf- und Abstiegshilfe 10' im zweiten Betriebszustand II ist, und das Rampenteil 12 in der geneigten, zweiten Position P2 eine ebene Trittfläche 14 aufweist. Anstelle der Ausgestaltung des

Schwenklagers 56 und der Schwenkachse X₂ an den Kragarmen 62 des Halteelements 40 kann auch eine zwischen dem Drehlager 48 und der Drehschiebeführung 50 ausgebildete Bohrung 64 als Schwenkachse X₂ zur Umsetzung der Relativbewegung zwischen dem Halteelement 40 und der Halteeinrichtung 54 verwendet werden.

Ähnliche oder gleiche Bauteile sind mit denselben Bezugszeichen versehen.

### Bezugszeichen

- 10, 10': Auf- und Abstiegshilfe
- 12: Rampenteil
- 14, 14': Trittfläche
- 16, 16': Trittflächenelement
- 18: Durchbruch
- 20: Trittstufen
- 24: erstes Ende
- 26: zweites Ende
- 28: Schwenklager
- 30: Verrastmechanismus
- 32: Aufnahme
- 34: Flächenelement
- 36: Koppelmechanismus
- 38, 38': Stabelement
- 40, 40': Halteelement
- 42, 42': Drehlager
- 44: Trittstufenfläche
- 46: Handhabe
- 48: Drehlager
- 50: Drehschiebeführung
- 52: Aufstellfuß
- 54: Halteeinrichtung
- 56: Schwenklager
- 58: Arretiermechanismus
- 60: Arretierteil
- 62: Kragarm
- 64: Bohrung
- 66: Arretier- oder Entriegelungsbewegung
- 100: Aufzuchtvolliere
- 102: Rahmengestell
- 104, 104': Aufzuchtebene
- 106: Scharrraum
- 108: Strebe
- 110: Rampe
- 112: Bodenelement
- α: Winkel
- G: Gitterstruktur
- MW: Maschenweite
- X₁, X₂: Schwenkachse
- P1: erste Position
- P2: zweite Position

## Patentansprüche

1. Auf- und Abstiegshilfe (10) für Geflügeltiere, insbesondere Hühnerküken, zum Erreichen verschiedener Aufzuchtebenen (104, 104') an einer Aufzuchtvolliere (100), mit einem eine Trittfläche (14, 14') ausbildenden Rampenteil (12), welches zwischen einer im Wesentlichen horizontal ausgerichteten, ersten Position (P1) und einer um einen Winkel (α) zur ersten Position (P1) geneigten, zweiten Position (P2) hin- und herschwenkbar ist, wobei die Trittfläche (14') des Rampenteils (12) in zumindest der geneigten, zweiten Position (P2) eine Vielzahl an Trittstufen (20) aufweist.

2. Auf- und Abstiegshilfe (10) nach Anspruch 1,
**dadurch gekennzeichnet, dass** die Trittfläche (14, 14') aus einer Vielzahl an Trittflächenelementen (16, 16') ausgebildet ist, welche dazu eingerichtet sind, in der horizontalen Position (P1) des Rampenteils (12) eine im Wesentlichen ebene Trittfläche (14, 14') und in der zweiten Position (P2) mit der Vielzahl an Trittstufen (20) eine gestufte Trittfläche (14, 14') zu erzeugen.

3. Auf- und Abstiegshilfe (10) nach Anspruch 1 oder 2,
**dadurch gekennzeichnet, dass** die Trittfläche (14, 14') eine Vielzahl an Trittflächenelementen (16, 16') aufweist, welche derart beweglich am Rampenteil (12) aufgenommen sind, dass jedes einzelne Trittflächenelement (16, 16') unabhängig von der Schwenkstellung (P1, P2) des Rampenteils (12) eine etwa waagerecht ausgerichtete Trittstufenfläche (44) aufweist.

4. Auf- und Abstiegshilfe (10) nach einem der Ansprüche 1 bis 3,
**dadurch gekennzeichnet, dass** das Rampenteil (12) ein erstes Ende (24), an dem ein Schwenklager (28) ausgebildet ist, und ein zum ersten Ende (24) entgegengesetzt angeordnetes zweites, um das Schwenklager (28) schwenkbares Ende (26) aufweist, welches vorzugsweise einen Verrastmechanismus (30) zum Arretieren des Rampenteils (12) in seiner horizontalen Position (P1) umfasst.

5. Auf- und Abstiegshilfe (10) nach einem der Ansprüche 2 bis 4,
**dadurch gekennzeichnet, dass** die Trittflächenelemente (16, 16') mittels eines sich von einem/dem ersten zu einem/dem zweiten Ende (24, 26) des Rampenteils (12) erstreckenden Koppelmechanismus (36) beweglich miteinander verbunden sind, welcher dazu eingerichtet ist, mit Verschwenken des Rampenteils (12) sämtliche Trittflächenelemente (16, 16') relativ zueinander, vorzugsweise synchron, zu bewegen.

6. Auf- und Abstiegshilfe (10) nach Anspruch 5,
**dadurch gekennzeichnet, dass** der Koppelmechanismus (36) wenigstens zwei parallel zueinander ausgerichtete Stabelemente (38, 38') aufweist, welche jeweils endseitig über Haltelemente (40, 40') miteinander verbunden sind, und wobei jedes Trittflächenelement (16, 16') mit jedem der Stabelemente (38, 38') über je ein Drehlager (42, 42') gekoppelt ist.

7. Auf- und Abstiegshilfe (10) nach Anspruch 6,
**dadurch gekennzeichnet, dass** jedes Stabelement (38, 38') mit einem seiner Enden mittels eines Drehlagers (48) an einem der Halteelemente (40, 40') befestigt und das entgegengesetzt angeordnete Ende jedes Stabelements (38, 38') mittels einer Drehschiebeführung (50) rotatorisch und translatorisch bewegbar an dem jeweils gegenüberliegend angeordneten Haltelement (40, 40') aufgenommen ist.

8. Auf- und Abstiegshilfe (10) nach Anspruch 6 oder 7,
**dadurch gekennzeichnet, dass** die Halteelemente (40, 40'), an den je eines der beider Stabelemente (38, 38') mittels eines/des Drehlagers (48) befestigt ist, an jeweils entgegengesetzten Enden (24, 26) des Rampenteils (12) angeordnet sind.

9. Auf- und Abstiegshilfe (10) nach einem der Ansprüche 4 bis 8,
**dadurch gekennzeichnet, dass** ein am schwenkbaren Ende (26) des Rampenteils (12) angeordnetes Haltelement (40') mit einem auf der Unterseite des Haltelements (40') angeordneten Aufstellfuß (52) ausgerüstet ist.

10. Auf- und Abstiegshilfe (10) nach einem der Ansprüche 4 bis 9,
**dadurch gekennzeichnet, dass** ein am ersten Ende des Rampenteils (12) angeordnetes Haltelement (40) das Schwenklager (28) für das Rampenteil (12) ausbildet und/oder ein am zweiten, schwenkbaren Ende (26) des Rampenteils (12) angeordnetes Haltelement (40, 40') eine Handhabe (46) zum Betätigen des daran angeordneten Verrastmechanismus (30) aufweist.

11. Auf- und Abstiegshilfe (10) nach einem der vorstehenden Ansprüche,
**dadurch gekennzeichnet, dass** die Trittfläche (14, 14'), vorzugsweise jedes Trittflächenelement (16, 16'), eine Gitterstruktur (G) mit einer Maschenweite (MW) im Bereich von etwa 1,0 cm bis ungefähr 3,0 cm aufweist, bevorzugt von etwa 1,8 bis 2,5 cm,
wobei vorzugsweise unabhängig von der Position (P1, P2) des Rampenteils (12) die Maschenweite (MW) zwischen zwei zueinander bewegbaren Trittflächenelementen (16, 16') mittels des die Trittflächenelemente (16, 16') verbindenden Koppelmechanismus (36) unverändert bleibt.

12. Auf- und Abstiegshilfe (10') für Geflügeltiere, insbesondere Hühnerküken, zum Erreichen verschiedener Aufzuchtebenen (104, 104') an einer Aufzuchtvolliere (100), mit einem eine Trittfläche (14, 14') ausbildenden Rampenteil (12), welches zwischen einer im Wesentlichen horizontal ausgerichteten, ersten Position (P1) und einer um einen Winkel (α) zur ersten Position (P1) geneigten, zweiten Position (P2) hin- und herschwenkbar ist, wobei die Auf- und Abstiegshilfe (10') weiter dazu eingerichtet ist, zwischen einem ersten Betriebszustand (I) und einem zweiten Betriebszustand (II) hin und her geschaltet zu werden, wobei die Trittfläche (14, 14') des Rampenteils (12) im ersten Betriebszustand (I) in der geneigten, zweiten Position (P2) eine Vielzahl an Trittstufen (20) aufweist, und wobei die Trittfläche (14, 14') des Rampenteils (12) im zweiten Betriebszustand (II) in der geneigten, zweiten Position (P2) eine ebene Trittfläche (14) aufweist.

13. Auf- und Abstiegshilfe (10') nach Anspruch 12,
wobei zusätzlich zu einem/dem am ersten Ende (24) des Rampenteils (12), insbesondere an einem Halteelement (40), ausgebildeten Schwenklager (28) ein weiteres Schwenklager (56) ausgebildet ist, mittels dem das Halteelement (40), welches das erste Ende (24) des Rampenteils (12) definiert, schwenkbar mit einer Halteeinrichtung (54) verbunden ist, und wobei weiter vorzugsweise dem Schwenklager (56) ein Arretiermechanismus (58) zum Sperren und Freigeben des zweiten Schwenklagers (57) zugeordnet ist.

14. Aufzuchtvolliere (100) für Geflügel, mit
einem Rahmengestell (102) und mehreren auf unterschiedlichen Höhen am Rahmengestell (102) ausgebildeten Aufzuchtebenen (104, 104'), und
mindestens einer Auf- und Abstiegshilfe (10, 10') nach einem der vorstehenden Ansprüche 1 bis 11 oder nach einem der vorstehenden Ansprüche 12 oder 13.

15. Verwendung einer Auf- und Abstiegshilfe (10, 10') nach einer der vorstehenden Ansprüche 1 bis 13 in einer Aufzuchtvolliere (100) für Geflügeltiere in einer im Wesentlichen horizontalen, ersten Position (P1) als Bodenelement (112) einer Aufzuchtebene (104) oder in einer um einen Winkel (α) zur ersten Position (P1) geneigten, zweiten Position (P2) als eine mehrere Aufzuchtebenen (104, 104') miteinander verbindende Rampe (110).
